Europäisches Patentamt

European Patent Office

Office européen des brevets

(19)

(11) EP 0 596 784 B1

(12) **FASCICULE DE BREVET EUROPEEN**

(45) Date de publication et mention
de la délivrance du brevet:
**12.03.1997 Bulletin 1997/11**

(51) Int Cl.6: **G01S 13/66**, H01Q 25/00

(21) Numéro de dépôt: **93402668.3**

(22) Date de dépôt: **29.10.1993**

(54) **Antenne pour radar notamment de désignation et de trajectographie**

Radarantenne zur Erfassung und Verfolgung des Zieles

Search and track radar antenna

(84) Etats contractants désignés:
**DE GB IT**

(30) Priorité: **06.11.1992 FR 9213393**

(43) Date de publication de la demande:
**11.05.1994 Bulletin 1994/19**

(73) Titulaire: **THOMSON-CSF**
**75008 Paris (FR)**

(72) Inventeurs:
• **Pourailly, Jean-Louis, Thomson-CSF**
**F-92402 Courbevoie Cédex (FR)**
• **Roger, Joseph, Thomson-CSF**
**F-92402 Courbevoie Cédex (FR)**

(74) Mandataire: **Benoit, Monique et al**
**THOMSON-CSF-S.C.P.I.,**
**13, Avenue du Président**
**Salvador Allende**
**94117 Arcueil Cédex (FR)**

(56) Documents cités:
**US-A- 3 965 475     US-A- 4 881 078**

• **PATENT ABSTRACTS OF JAPAN vol. 8, no. 115**
**(E-247) (1552) 29 Mai 1984 & JP-A-59 028 703**
**(HITACHI SEISAKUSHO) 15 Février 1984**
• **PATENT ABSTRACTS OF JAPAN vol. 15, no. 480**
**(P-1284) 5 Décembre 1991 & JP-A-03 206 984**
**(MITSUBISHI) 10 Septembre 1991**

## Description

La présente invention concerne une antenne pour radar. Elle s'applique notamment aux antennes de radar de trajectographie et de désignation, cette dernière consistant par exemple en une veille dans un angle solide limité, permettant en cas de détection d'une cible de fournir une direction approximative de celle-ci. Plus généralement, elle s'applique à tous radars dont une fonction nécessite une localisation précise des cibles et une réaction rapide par rapport aux détections.

Afin d'atteindre une bonne acuité, les antennes doivent avoir de grandes tailles pour obtenir des faisceaux fins. Par ailleurs, une bonne précision de détection nécessite une rigidité et une stabilité suffisantes de la mécanique d'antenne. Enfin, des temps de réaction courts imposent à ces antennes de tourner et de se positionner rapidement. Dans le domaine des fréquences de la bande L par exemple, ces contraintes deviennent difficiles à satisfaire, notamment à cause des grandes dimensions mises en jeu, ainsi qu'aux poids des antennes. Dans ce dernier cas, les asservissements mécaniques répondent particulièrement mal aux contraintes de rapidité et de précision mécaniques.

Des exemples de réalisation d'antenne tentant de répondre aux contraintes précitées sont connus. Ces antennes sont notamment destinées à des radars de désignation et de trajectographie. Une réalisation connue consiste en un paraboloïde de grande dimension vis-à-vis de la longueur d'onde, orientable à l'aide d'une tourelle. La fonction de désignation se fait par déplacement mécanique du réflecteur de l'antenne dont l'axe explore la zone angulaire à veiller. Mais dans ce cas, la veille est séquentielle, donc lente. De plus la réalisation des structures est peu aisée, due au fait notamment que le volume et le poids de l'ensemble sont importants et que les servomécanismes doivent assurer une bonne précision des positions.

Une autre réalisation connue consiste en une antenne à balayage électronique qui grâce à ses déphaseurs peut déplacer rapidement l'axe de son faisceau. Le temps de veille est ainsi réduit, mais c'est une solution chère, notamment en raison du nombre élevé de déphaseurs nécessaires. De plus, dans ce cas, il est difficile à l'antenne de réaliser une auto-calibration. Cette absence de possibilité nécessite alors un grand soin de fabrication de telles antennes, ce qui tend encore à augmenter leur coût.

Le but de l'invention est de pallier les inconvénients précités, notamment en permettant aux radars d'obtenir une bonne acuité, une bonne précision et des temps de réaction rapide.

A cet effet, l'invention a pour objet une antenne pour radar, caractérisée en ce qu'elle comprend au moins une partie destinée à la réception constituée d'antennes élémentaires reliées chacune à un récepteur délivrant un signal de réception à un calculateur de formation de faisceaux par calcul, et une partie destinée à l'émission et à la réception constituée au moins d'une antenne élémentaire, le calculateur formant, à partir des signaux reçus par les antennes élémentaires de la partie destinée à la réception, un ensemble de faisceaux simultanés dans un angle solide formé par le faisceau de l'antenne élémentaire de la partie destinée à l'émission et à la réception.

L'invention a pour principaux avantages qu'elle permet de simplifier les structures mécaniques des antennes notamment destinées à faire simultanément de la désignation et de la trajectographie de cibles multiples, qu'elle permet de réaliser des auto-calibrations d'antenne, qu'elle facilite la réalisation mécanique des antennes et qu'elle diminue leur coût.

D'autres caractéristiques et avantages de l'invention apparaîtront au cours de la description qui suit faite en regard des dessins annexés qui représentent :

- la figure 1, un synoptique du fonctionnement d'une antenne selon l'invention;

  - la figure 2, une illustration de faisceaux d'émission et de réception d'une antenne selon l'invention ;
  - la figure 3, un mode de réalisation possible d'une antenne selon l'invention ;
  - la figure 4, l'antenne précédente disposée sur un support tournant.

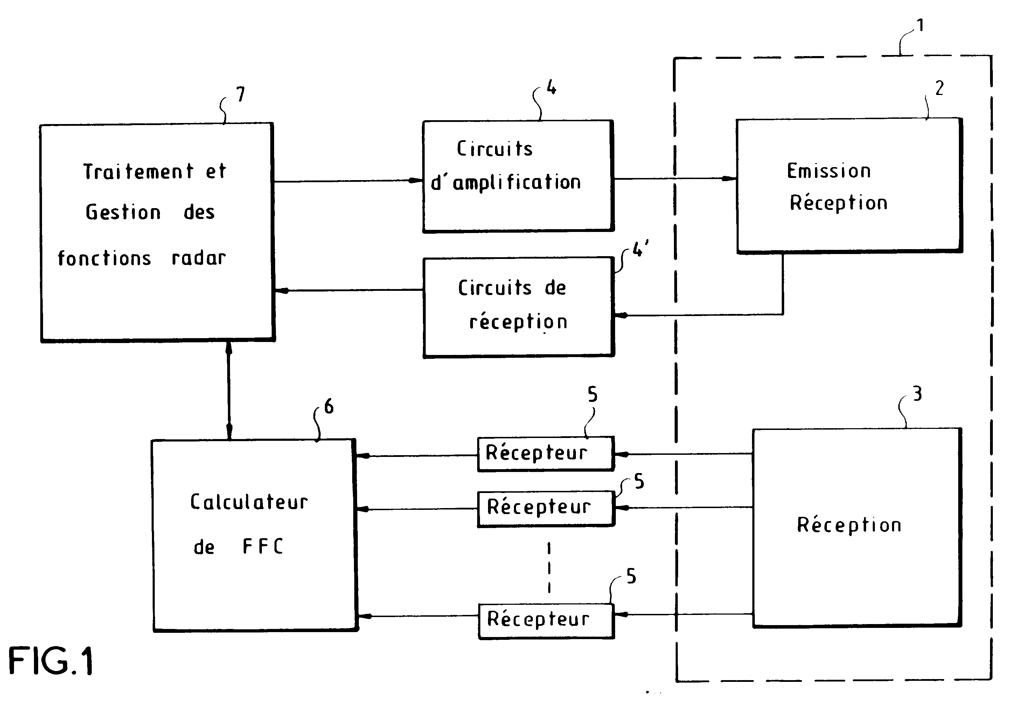

La figure 1 présente un synoptique du fonctionnement d'une antenne selon l'invention. L'antenne 1 est constituée de deux parties distinctes : une partie destinée à l'émission et à la réception 2 et une partie destinée à la réception 3. La partie d'émission et réception 2 comprend au moins une antenne élémentaire et est reliée à des circuits d'amplification 4 et à des circuits de réception 4'. La partie réception comprend plusieurs antennes élémentaires, au nombre de N par exemple, reliée chacune à un récepteur élémentaire 5. Chaque récepteur élémentaire 5 comprend par exemple un amplificateur à faible bruit, des circuits de transposition de fréquence et un ou plusieurs codeurs analogique-numérique. Ces récepteurs élémentaires 5 sont reliés à l'entrée d'un calculateur de formation de faisceaux par calcul 6 dorénavant appelé calculateur FFC. Ce calculateur 6 permet de former des faisceaux simultanés à la réception à partir des signaux reçus par les N antennes élémentaires de réception. Ces signaux transitent par les récepteurs élémentaires 5 et sont notamment numérisés. Pour former un faisceau dans une direction définie par un vecteur $\vec{u}$, le calculateur 6 effectue par exemple le calcul suivant :

$$\sum_{i=1}^{N} S_i e^{j\frac{2\pi}{\lambda} <\overrightarrow{OM}_i, \vec{u}>}$$

où :

-       λ représente la longueur d'onde des signaux reçus,
-       $S_i$ représente le signal reçu par une antenne élémentaire de rang i parmi les N antennes de réception, i étant un entier inférieur ou égal à N
-       $< \overrightarrow{OM_i}, \vec{u} >$ représente le produit calcaire du vecteur $\vec{u}$ et d'un vecteur

$\overrightarrow{OM_i}$ formé à partir du point d'origine O de la direction $\vec{u}$ et un point $M_1$ représentant l'emplacement d'une antenne de rang i. Les N antennes élémentaires de réception sont par exemple situées dans un même plan.

Le calculateur de FFC 6 forme un ensemble de faisceaux simultanés occupant l'angle solide du faisceau d'émission formé à partir de la partie émission et réception 2 de l'antenne selon l'invention.

Des moyens de traitement et de gestion des fonctions radar 7 sont reliés par exemple aux circuits d'amplification 4 et au calculateur de FFC 6. Ces moyens 7 traitent notamment les signaux reçus et détectés dans les faisceaux formés par le calculateur de FFC 6. Ils commandent notamment ce dernier ainsi que les circuits d'amplification par exemple.

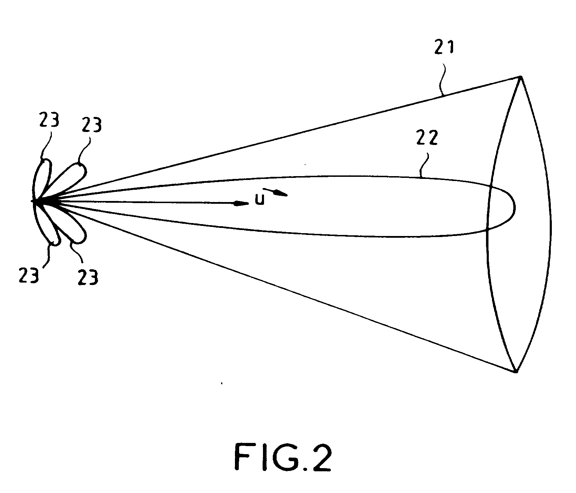

La figure 2 illustre les faisceaux d'émission et de réception de l'antenne selon l'invention. Un premier faisceau 21 constitue un angle solide. Ce faisceau 21 formé à partir de la partie émission et réception 2 de l'antenne selon l'invention éclaire des cibles. Pour assurer une détection la plus large possible, cet angle doit être le plus large possible. Il peut à cet effet être formé à partir d'une antenne élémentaire d'émission de petite dimension.

Un deuxième faisceau 22 dans la direction $\vec{u}$ précitée, plus fin que le précédent est à l'intérieur de celui-ci et constitue un faisceau de réception. Ce faisceau de réception 22 est obtenu par calcul par le calculateur de FFC 6. Ce dernier permet, par le calcul, de déplacer le faisceau de réception 22 à l'intérieur du faisceau d'émission 21. Plusieurs faisceaux de réception peuvent être créés simultanément à l'intérieur du faisceau d'émission 21. Le faisceau de réception 22 permet de localiser avec précision une cible détectée dans le faisceau d'émission 21. Pour améliorer cette localisation, les lobes de réseaux 23 du faisceau de réception 22 doivent être de préférence à l'extérieur de l'angle solide formé par le premier faisceau 21, évitant ainsi des détections parasites. A cet effet, les antennes élémentaires de réception peuvent par exemple être disposées sur des cercles concentriques.

Un mode de fonctionnement possible d'un radar utilisant une antenne selon l'invention est par exemple le suivant : une cible éclairée par le premier faisceau 21 est par exemple détectée, puis cette cible est localisée de façon précise grâce à un ou plusieurs faisceaux simultanés plus fins du type du deuxième faisceau 22 contenus dans le premier faisceau 21 et obtenus au moyen du calculateur de FFC 6, cette localisation étant alors réalisée selon des calculs connus de l'homme du métier. Cette localisation précise permet notamment d'assurer une fonction de désignation.

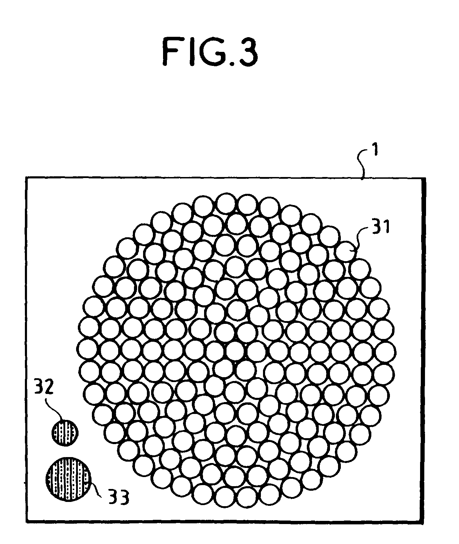

La figure 3 présente un mode de réalisation possible d'une antenne selon l'invention. La partie réception de l'antenne 1 est constituée de paraboles disposées sur des cercles concentriques. Chacune d'entre elles, constituant une antenne élémentaire, est reliée à un récepteur élémentaire 5. La partie d'émission et de réception est constituée par exemple de deux paraboles 32, 33 de rayons différents. Une première parabole 32 de rayon le plus faible peut servir par exemple à des opérations de veille grâce au faisceau d'émission qu'elle génère qui est plus large que celui de la deuxième parabole 33, de rayon plus élevé. Cette dernière peut par exemple servir pour des opérations de poursuite. Le rayon de la première parabole 32 peut être par exemple égal au rayon des paraboles 31 de la partie réception. Le rayon de la deuxième parabole 33 peut être par exemple égal au double de celui de la première parabole 32. Il est possible de conserver la possibilité de réaliser à la fois des opérations de veille et de surveillance en remplaçant ces deux paraboles 32, 33 par une parabole unique ayant par exemple un rayon égal à 1,5 fois le rayon de la première parabole 32. Le diamètre de la parabole d'émission est notamment déterminé par l'angle solide θxθ à couvrir par le faisceau d'émission. Dans le cas d'utilisation de deux paraboles 32, 33, le rayon de la première 32 peut être par exemple défini de façon à couvrir cet angle solide et donc égal à $\frac{\lambda}{\theta}$ où λ est la longueur d'onde d'émission.

En présence d'une cible détectée, une formation de faisceaux monopulses du type somme, différence en gisement et différence en site, connus de l'homme du métier, au voisinage de la direction de la cible permet d'obtenir de très bonnes mesures de la direction réelle de celle-ci, notamment pour des fonctions de trajectographie. La cible est détectée au moyen des faisceaux larges obtenus à partir des paraboles 32, 33 de la partie émission et réception, et la mesure est faite au moyen des faisceaux formés par le calculateur de FFC à partir des paraboles 31 de réception.

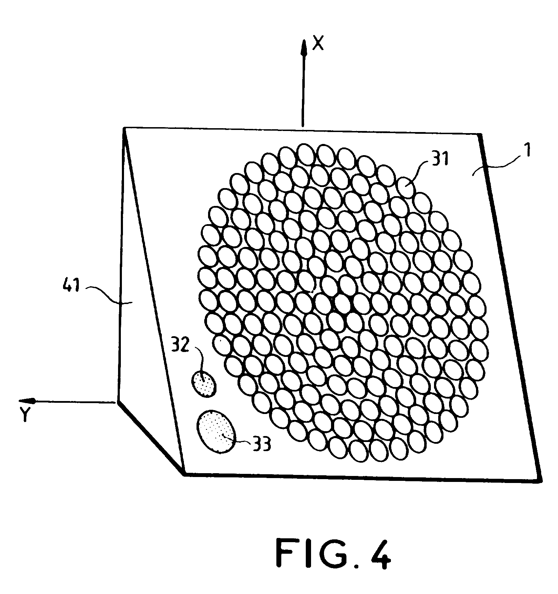

La figure 4 présente l'antenne 1 de la figure 3 disposée sur un support tournant 41. Ce support tourne par exemple autour d'un premier axe x pour permettre à l'antenne 1 d'assurer un balayage en gisement et autour d'un deuxième axe y, perpendiculaire au précédent, pour assurer un balayage en site.

Il est possible d'effectuer des opérations d'auto-calibration, grâce à une balise connue par exemple. Ces opérations d'auto-calibration permettent notamment de calculer des coefficients et des paramètres servant à l'élaboration des formations de faisceaux par calculs. Ces coefficients et ces paramètres peuvent par exemple être stockés dans le calculateur de FFC 6.

L'auto-calibration permet notamment de s'affranchir de contraintes de réalisations mécaniques précises, ce qui permet par ailleurs de diminuer les coûts de fabrication. Il n'est pas utile non plus de réaliser un asservissement mécanique d'antenne très précis et très performant. La précision et la rapidité du positionnement sont en effet obtenues grâce aux faisceaux formés au moyen du calculateur de FFC 6.

Des variantes de réalisation de l'antenne selon l'invention peuvent être envisagées. Les deux partie d'antennes peuvent être placées sur des supports tournants différents par exemple, la partie destinée à la réception étant placée sur un premier support et la partie destinée à l'émission et à la réception étant placée sur un deuxième support. Les paraboles 31 de la partie destinée à la réception peuvent avoir par exemple des diamètres de différentes valeurs. Les paraboles 31, 32, 33 de l'antenne peuvent être remplacées par des antennes à modules actifs. Elles peuvent aussi être remplacées par des antennes à balayage électronique. Cela permet notamment d'éviter ou de limiter l'utilisation de supports tournants. Cela augmente aussi la vitesse d'accès à des angles solides de l'espace à analyser ou à surveiller.

Les sources primaires alimentant les antennes élémentaires ou les paraboles 31, 32, 33 peuvent être à bipolarisation par exemple. Cela augmente notamment la probabilité de détection et la capacité d'identification d'une cible. Ces sources primaires peuvent aussi être multibandes par exemple, ou plusieurs sources primaires peuvent fonctionner dans des bandes de fréquences différentes et être décalées dans le plan focal des paraboles. Cela permet notamment de choisir la bande de fréquences la mieux adaptée à un angle solide de désignation ou à la précision d'écartométrie souhaitée.

Les circuits de réception 4' peuvent par exemple être supprimés, les paraboles 32 et 33 n'assurant alors que l'émission et les paraboles 31 assurant la réception pour la détection, la désignation et la trajectographie des cibles.

**Revendications**

1. Antenne pour radar, caractérisée en ce qu'elle comprend au moins une partie destinée à la réception (3) constituée d'antennes élémentaires (31) reliées chacune à un récepteur (5) délivrant un signal de réception à un calculateur de formation de faisceaux par calcul (6), et une partie destinée à l'émission et à la réception (2) constituée au moins d'une antenne élémentaire (32, 33), le calculateur (6) formant, à partir des signaux reçus par les antennes élémentaires (31) de la partie destinée à la réception (3), un ensemble de faisceaux simultanés (22) dans un angle solide (21) formé par le faisceau de l'antenne élémentaire (32, 33) de la partie destinée à l'émission et à la réception (2).

2. Antenne selon la revendication 1, caractérisée en ce que les antennes élémentaires (31) de la partie destinée à la réception (3) sont disposées sur des cercles concentriques.

3. Antenne selon l'une quelconque des revendications précédentes, caractérisée en ce que les antennes élémentaires (31, 32, 33) sont des paraboles.

4. Antenne selon la revendication 3, caractérisée en ce que la partie destinée à l'émission et à la réception (2) comprend deux paraboles (32, 33) de diamètres différents, le plus petit diamètre étant égal au diamètre des paraboles (31) de la partie destinée à la réception (3).

5. Antenne selon l'une quelconque des revendications précédentes, caractérisée en ce que ses parties (2, 3) sont placées sur un plateau tournant (41).

6. Antenne selon l'une quelconque des revendications 1 à 4, caractérisée en ce que ses parties (2, 3) sont placées sur des supports tournant distincts.

7. Antenne selon l'une quelconque des revendications 1 ou 2, caractérisée en ce que les antennes élémentaires sont des antennes à modules actifs.

8. Antenne selon l'une quelconque des revendications 1 ou 2, caractérisée en ce que les antennes élémentaires sont à balayage électronique.

9. Antenne selon l'une quelconque des revendications précédentes, caractérisée en ce que le faisceau (21) issu de la partie destinée à l'émission et à la réception (2) est utilisé pour faire de la détection et les faisceaux (22) issus de la partie destinée à la réception (3) sont utilisés pour faire de la localisation de cibles.

**Patentansprüche**

1. Radarantenne, dadurch gekennzeichnet, daß sie wenigstens einen zum Empfang bestimmten Teil (3), der aus Elementantennen (31) besteht, die jeweils mit einem Empfänger (5) verbunden sind, der ein Empfangssignal an einen Rechner (6) zur Strahlbildung durch Berechnung liefert, sowie einen zum Senden und zum Empfang bestimmten Teil (2) aufweist, der aus wenigstens einer Elementantenne (32, 33) besteht, wobei der Rechner (6) ausgehend von den durch die Elementantennen (31) des zum Empfang bestimmten Teils (3) empfangenen Signalen eine Gruppe von Simultanstrahlen (22) in einem Raumwinkel (21) bildet, der durch das Strahlenbündel der Elementantenne (32, 33) des zum Senden und zum Empfang bestimmten Teils (2) gebildet ist.

2. Antenne nach Anspruch 1, dadurch gekennzeichnet, daß die Elementantennen (31) des zum Empfang bestimmten Teils (3) auf konzentrischen Kreisen angeordnet sind.

3. Antenne nach einem der vorhergehenden Ansprüche, dadurch gekennzeichnet, daß die Elementantennen (31, 32, 33) Parabolelemente sind.

4. Antenne nach Anspruch 3, dadurch gekennzeichnet, daß der zum Senden und zum Empfang bestimmte Teil (2) zwei Parabolelemente (32, 33) mit unterschiedlichen Durchmessern aufweist, wobei der kleinere Durchmesser gleich dem Durchmesser der Parabolelemente (31) des zum Empfang bestimmten Teils (3) ist.

5. Antenne nach einem der vorhergehenden Ansprüche, dadurch gekennzeichnet, daß ihre Teile (2, 3) auf einer Drehscheibe (41) angeordnet sind.

6. Antenne nach einem der Ansprüche 1 bis 4, dadurch gekennzeichnet, daß ihre Teile (2, 3) auf verschiedenen Drehträgern angeordnet sind.

7. Antenne nach einem der Ansprüche 1 oder 2, dadurch gekennzeichnet, daß die Elementantennen Antennen mit aktiven Modulen sind.

8. Antenne nach einem der Ansprüche 1 oder 2, dadurch gekennzeichnet, daß die Elementantennen mit elektronischer Abtastung arbeiten.

9. Antenne nach einem der vorhergehenden Ansprüche, dadurch gekennzeichnet, daß das aus dem zum Senden und zum Empfang bestimmten Teil (2) austretende Strahlenbündel (21) zur Durchführung der Erfassung und die aus dem zum Empfang bestimmten Teil (3) austretenden Strahlenbündel (22) zur Durchführung des Ortens von Zielen verwendet werden.

**Claims**

1. Antenna for radar, characterized in that it comprises at least one part intended for reception (3) consisting of elementary antennae (31) each connected to a receiver (5) delivering a reception signal to a computerized beam-forming computer (6), and a part intended for transmission and for reception (2) consisting at least of an elementary antenna (32, 33), the computer (6) forming, from the signals received by the elementary antennae (31) of the part intended for reception (3), a set of simultaneous beams (22) within a solid angle (21) formed by the beam of the elementary antenna (32, 33) of the part intended for transmission and for reception (2).

2. Antenna according to Claim 1, characterized in that the elementary antennae (31) of the part intended for reception (3) are arranged in concentric circles.

3. Antenna according to any one of the preceding claims, characterized in that the elementary antennae (31, 32, 33) are parabolas.

4. Antenna according to Claim 3, characterized in that the part intended for transmission and for reception (2) comprises two parabolas (32, 33) of different diameters, the smaller diameter being equal to the diameter of the parabolas (31) of the part intended for reception (3).

5. Antenna according to any one of the preceding claims, characterized in that its parts (2, 3) are placed on a rotating table (41).

6. Antenna according to any one of Claims 1 to 4, characterized in that its parts (2, 3) are placed on individual rotating supports.

7. Antenna according to either one of Claims 1 and 2, characterized in that the elementary antennae are antennae with active modules.

8. Antenna according to either one of Claims 1 and 2, characterized in that the elementary antennae are electronic scanning antennae.

9. Antenna according to any one of the preceding claims, characterized in that the beam (21) emanating from the part intended for transmission and for reception (2) is used to carry out detection and the beams (22) emanating from the part intended for reception (3) are used to carry out target location.

FIG.1

| | |
|---|---|
| Traitement et Gestion des fonctions radar | 7 |
| Circuits d'amplification | 4 |
| Emission Réception | 2 |
| Circuits de réception | 4' |
| Calculateur de FFC | 6 |
| Récepteur | 5 |
| Réception | 3 |

EP 0 596 784 B1

FIG.2

EP 0 596 784 B1

# FIG.3

EP 0 596 784 B1

FIG. 4